# EUROPEAN PATENT APPLICATION

(11) **EP 1 935 225 A1**
(43) Date of publication of application: **25.06.2008**
(21) Application number: 07123788.7
(22) Date of filing: 20.12.2007
(51) Int. Cl.: A01D 23/02, A01D 33/06

(54) **Reversible quick connecting flail element for agricultural machinery**

(30) Priority: 22.12.2006 US 615509
(71) Applicant: Kryptane Systems LLC, Louiseville, CO 80027 (US)
(72) Inventor: Peterson, Thomas T., Broomfield, CO 80020 (US); Willkomm, Wayne, Erie, CO 80516 (US); Adamson Michael, Broomfield, CO 80020 (US); Ulm, Stephen C., Arvada, CO 80005 (US)
(74) Representative: Karlsson, Leif Karl Gunnar

(57) **Abstract**

A flail element (11) including a base (12) at the proximal end of the flail element (11) which is connected to a pair of elongated fingers (15,16). The base (12) has a bore (13) formed therein which is sized to receive a mounting rod (14). The bore (13) and the fingers (15,16) are split to enable a flail (11) to be mounted on the rod (14) by spreading open the fingers (15,16) and the bore (13) and snapping the flail segment over the rod (14). Another method of attachment can be achieved by utilizing the shaped base and an appropriate receiving system. The elongated fingers (15,16) and base (12) form a substantially unitary flail element structure, A plurality of flail elements (11) are mounted to the mounting rod (14) to form a flail (32). In a defoliating machine (40) a plurality of flails (32) are mounted to a rotating drum (31).

## Description

### BACKGROUND OF THE INVENTION

### 1. Field of the Invention

The present invention relates generally to a defoliating device, and in particular to a quick connecting flail element for use in defoliating sugar beet crops.

### 2. Discussion of the Related Art

Flails are well known in the agricultural industry, and are used in a variety of different applications. In general, defoliating flails are used for removing leaves and other above-grade foliage and roughage in below grade tubers, such as sugar beets, in preparation of a sugar beet field for harvest. The flails are typically constructed from rubber or polyurethane and are formed in a variety of different shapes and sizes. Some flails include metal studs which are formed into the ends of the flails.

In various sugar beet harvesters, for example, multiple flails are arrayed about the circumference of a supporting drum. The flails mount to a number of spokes or rods, which laterally extend between the ends of the drum. Each rod contains a number of laterally displaced flails, which pivot as the drum is rotated. When rotated, the flails shred encountered foliage. Different sizes and types of flails may be mounted on the drums. Traditional flails often require spacers which are positioned between the flails. The vertical separation of the flails relative to the tuber being harvested, or in some situations the ground, may be adjusted as necessary to optimize contact with the foliage, without damaging the tuber, While existing flails have enjoyed considerable success, such known flails require at least partial dismantling of the defoliation machine in order to replace damaged or broken flails, with commensurate cost and downtime.

More specifically, prior art flails are mounted horizontally in a defoliation machine, as a group of three to ten units, on a bolt that passes through two plates welded to a round shaft or drum in the machine. Most commonly, known flails are made from rubber and are typically two inches wide with a 5/8 inch mounted hole through the top. Flails are mounted on brackets in clusters of 4 or 6 brackets. Brackets are typically 12 to 16 inches wide. The brackets hold five to seven flails each, one flail short of filling the bracket. Often replacing damaged or broken flails onto the brackets is both time consuming and difficult, For this reason, it is common to wait until the end of the harvesting season to replace the flails, as doing so at the time of failure will seriously interrupt production. The result of defoliating with a machine that includes damaged or broken flails is improperly cleaned or defoliated beets. Improperly cleaned beets leads to higher transportation costs, because the weight of the foliage is included but yields no end product.

While prior art flails are most commonly made from rubber, there have been attempts to manufacture them from polyurethane. However, the cost for polyurethane flails is nearly double the cost of rubber flails,

Flails fitted with steel studs have also been proposed. However, the steel studs have often proven to cause damage to the beets because every beet is impacted instead of only an occasional one. The steel studded products are not used in many areas where sugar beets are stored over the winter because the gouges from the studs cause bleeding, reducing the sugar content. With improvements in sugar beet seeds, resulting in producing much larger sugar beets that stand farther out of the ground then those known previously, knocking the beets out of the ground and damaging them is a more serious problem than it was about two decades ago.

### SUMMARY OF THE INVENTION

In accordance with an embodiment of the present invention, a flail element includes a base coupled to a pair of elongated fingers. A narrow gap is formed between facing fingers. The base has a bore formed within a proximal region of the base and the bore is sized to receive a mounting rod. The elongated fingers and base form a substantially unitary flail element structure.

The quick connect flail of this invention has been configured to easily install on current rods in defoliation machines and makes replacing failed flail elements economically viable. The flails of this invention brush the tops off the sugar beet instead of scalping and shredding the foliage. The invention attaches to the cluster bracket of the defoliation apparatus with a split design so it slides over the rod instead of needing to disassemble the entire rod to replace one flail. The quick connect flail element is of a reversible construction. A flail comprised of one or more flail elements of the invention can be produced to be as long as any defoliating apparatus may require covering the entire width of the machine, or to be as short as to cover only a portion of the beet itself. As an example, the possible ranges are from as short as ½ inch to as long as 20 feet. The flail of this invention can be constructed from any elastomer or tough plastic. Specific examples, would be rubber, nylon elastomers, thermoplastics, other elastomers, and preferably, polyurethane. The flail can optionally include metal studs, or other hardened materials.

### BRIEF DESCRIPTION OF THE DRAWING

The above and other aspects, features, and advantages of the present invention will become more apparent upon consideration of the following description of preferred embodiments, taken in conjunction with the accompanying drawing figures, wherein:
FIG. 1 is a front view of a flail element in accordance with an embodiment of the present invention;
FIG. 2 is an edge or side view of the flail of FIG. 1;
FIG. 3 is a front-view of a flail comprised of a plurality of the Fig. 1 flail elements which are shown coupled to a mounting rod and associated brackets;
FIG. 4 is a side view of a rotor having a flail cluster formed with four separate flails;
FIG. 5 is a perspective view of a defoliating apparatus implementing flails in accordance with an embodiment of the present invention;
FIG. 6 is a partially broken away top view of the defoliating apparatus of FIG. 5; and
FIG. 7 is an alternative embodiment of a flail element in accordance with the invention.

### DETAILED DESCRIPTION OF PREFERRED EMBODIMENTS

In the following detailed description, reference is made to the accompanying drawing figures which form a part hereof, and which show by way of illustration specific embodiments of the invention. It is to be understood by those of ordinary skill in this technological field that other embodiments may be utilized and structural, as well as procedural, changes may be made without departing from the scope of the present invention. As a matter of convenience, various components of a flail will be described using exemplary materials, sizes, shapes, and dimensions. However, the present invention is not limited to the stated examples and other configurations are possible and within the teachings of the present disclosure.

By way of example only, various embodiments will be described in conjunction with a flail for defoliating sugar beets. However, it is to be understood that the present disclosure applies equally to other types of applications such as removing leaves and other above-grade foliage and roughage, prior to harvesting below grade tubers.

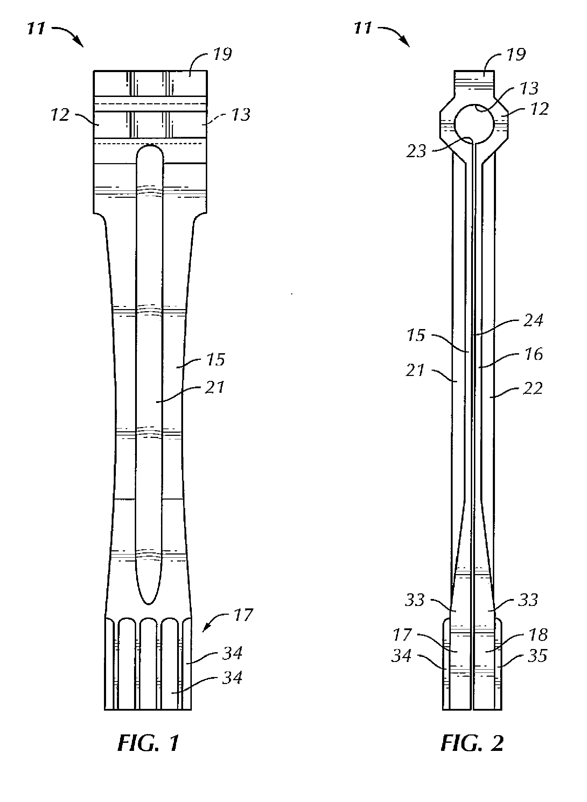

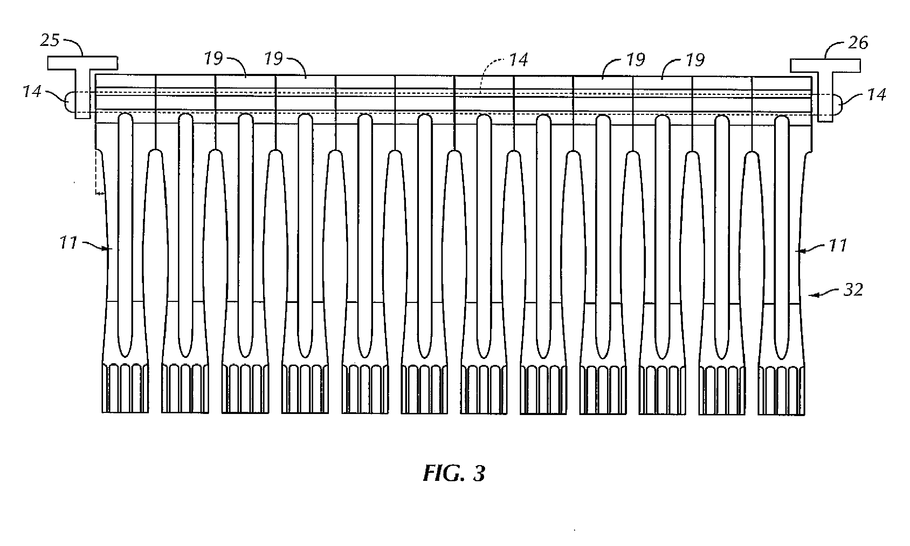

FIGS. 1 and 2 are front and side views, respectively, of flail element 11 in accordance with an embodiment of the present invention. Base 12 includes bore 13, which is sized to pivotally receive mounting rod 14 (Fig. 3). A pair of facing elongated fingers 15, 16 are shown connected to the base at the proximal region of the flail element. At the distal end of flail cement 11 are heads 17 and 18, each of which is large compared with the cross section of the majority of the length of the fingers. The flail element thus has a substantially unitary structure.

Each finger 15, 16 of flail element 11 is thin compared with respective head 17, 18. Ribs 21, 22 are formed along the sides of fingers 15, 16 to reinforce and stiffen the fingers.

Bore 13 of base 12 is split at gap 23 so that slot or space 24 between fingers 15, 16 provides a continuous opening from slot 24 into bore 13. The base is made of somewhat rigid, but sufficiently flexible material so that gap 23 may be opened sufficiently to fit over mounting rod 14. This enables base 12 to be pivotally secured to mounting rod 14 as seen in Fig. 3. The mounting rod may be secured to brackets 25 and 26, which in turn are secured to a drum (not shown in this figure). The spacing between the mounting brackets is typically structured and positioned so that the flail elements are positioned with their bases closely adjacent or touching so that there is little or no lateral movement of them relative to the mounting rod, while at the same time permitting the flail elements to rotate a desired amount about the mounting rod.

The distal portions of the fingers are formed so that there is increased mass at heads 17, 18 than would be in equivalent lengths of the fingers between the base and the heads. This weight distribution provides for maximum impact force and enhances centrifugal recovery, or bounce back, after the flail impacts the beet foliage, for example. Because fingers 15, 16 are relatively thin and made of flexible material, reinforcing ribs 21, 22 are provided to somewhat stiffen the fingers.

Another functional element of flail element 11 is cleaning projection 19. This cleaning aspect comes into play when flail elements 11 are engaged on rod 14 and the thus formed flail 32 is mounted to a drum by means of brackets 25, 26. This will be explained below.

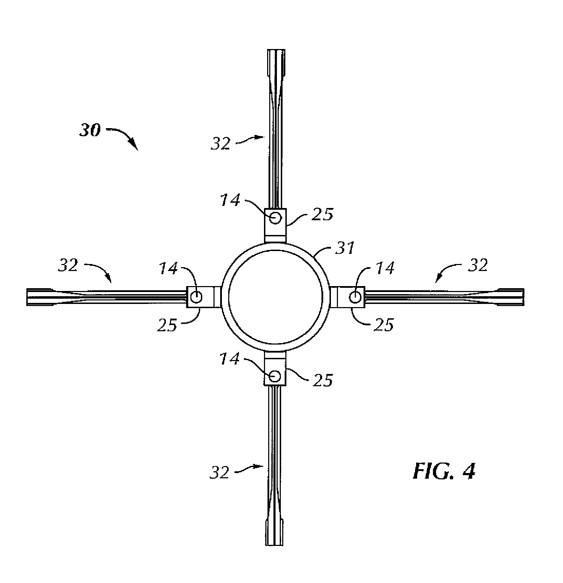

In a typical implementation, a number of flails, each having a plurality of flail elements (Fig. 1), may be secured to an outer portion of drum 31, such as that illustrated in FIG. 4. A preferred embodiment is shown in Fig. 3, where flail 32 is formed of a plurality of flail elements, in this case twelve elements 11, each rotatably and removable mounted to rod 14 which is mounted to brackets 25, 26.

Base 12 and fingers 15, 16 of each flail element 11 may be formed from any suitable material which provides flexing combined with suitable stiffness to accomplish the desired defoliation or topping, for example, of row crops. By way of non-limiting example, these flail elements may be formed from rubber, plastic, elastomers, nylon elastomers, thermoplastics, polyurethane, and the like. The overall length of flail element 11, as defined by the distance from the center of bore 13 and extending to the distal end or tip of fingers 15, 16, may be about 8-24 inches, with 12 inches being typical, The overall width of base 12 of segment 11 is preferably about two inches, but other widths could be employed. A flail 32 may be very narrow, having only a single flail element, or it may be very wide for a very large defoliating machine, as wide as 20 feet.

As can be seen more clearly in FIG. 2, the thickness of fingers 15, 16 is substantially uniform through most of its length, tapering at 33 to the thickness of heads 17, 18. Although no particular thickness is required or critical, the fingers may have a thickness of about 0.25 inch to about 2.0 inches. From Fig. 1 it can be seen that the fingers have widths which decrease toward their linear center, and increase to heads 17, 18. However, the tapering of the fingers is not a requirement and non-tapered fingers may also be used. Referring to Fig. 1, the width of base 12 is about two inches, as stated above, and the width of heads 17, 18 are about 1 % inches.

This means that there is minimal space between adjacent distal ends or heads 17, 18 of flail elements, as seen in Fig. 3. This results in more complete defoliation as compared with known prior art defoliation machines because there is minimal space along the width of a flail that is not occupied by the head of a flail element. Further, the increased mass of the flail element head results in cleaner, more complete defoliation.

Linear beads 34, 35 on the operative length of respective heads 17, 18 have two functions. In the first place, they provide wear surfaces. Because they project outwardly from the foliation-engaging surfaces of heads 17, 18, each flail element has an enhanced functional life. Further, beads 34, 35 add yet additional mass to the distal ends of the flail elements, further adding to the impact of the flail heads with the foliage. These beads may also be formed in a grid pattern, or they may be circular, angular, horizontal, or any combination thereof.

Because each flail element in this embodiment is two sided, its life is further increased because it is reversible on rod 14. Since drum 31 normally rotates in only one direction, only one of facing flail element heads makes contact with the foliage. When this leading flail element head is worn or is damaged, a flail element can be easily removed from rod 14, reversed, and reinstalled in seconds.

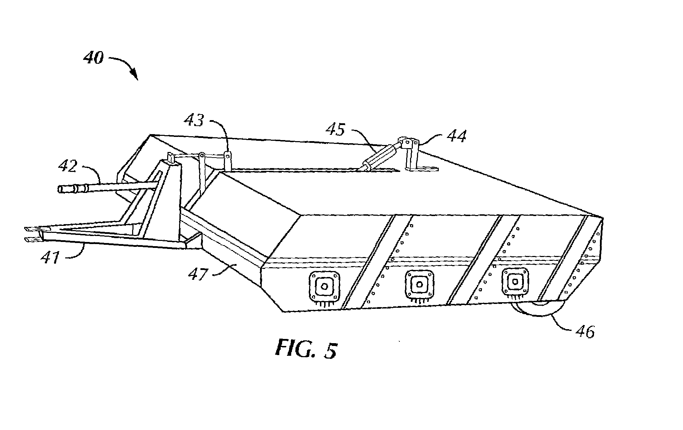

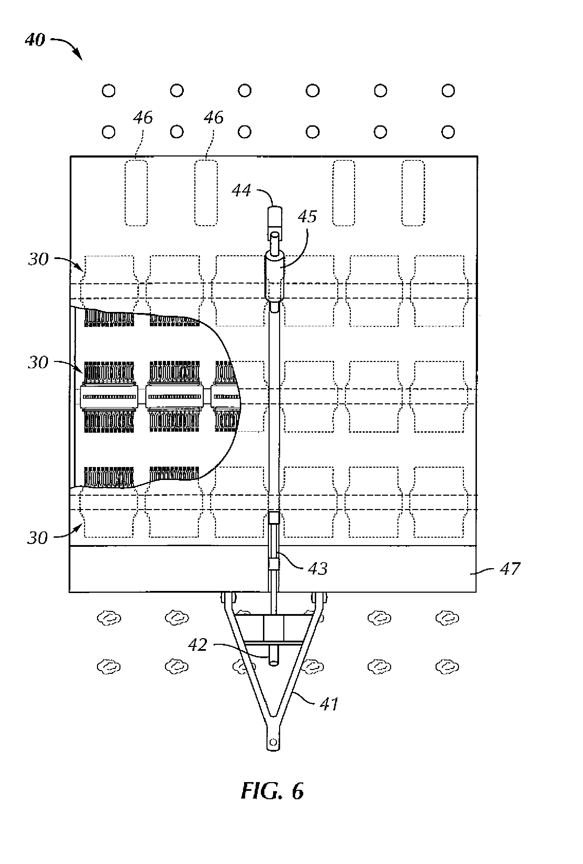

With specific reference to FIG. 4, there is shown a side view of a rotor implementing four separate flails which make up flail cluster 30 in accordance with an embodiment of the present invention. Several such rotors are installed in defoliating apparatus 40 (Figs. 5 and 6). The illustrated portion of flail cluster 30 includes four separate flails 32, mounted onto drum 31 at various locations about the drum, collectively defining a flail cluster, As an example, during operation, the rotor may rotate in a counter-clockwise direction as viewed in Fig. 4, causing the elongated fingers of the individual flail segments to contact beet foliage.

The rotor illustrated in FIG. 4 is formed as a single flail cluster containing four individual flails 32. If desired, flail clusters containing additional or fewer flails (for example, 2-8 flails, or even more) may alternatively be implemented.

From Figs. 3 and 4 it can be perceived that there is some element of free space between mounting rod 14 and the surface of drum 31. This is necessary to enable flail elements 11 to rotate about rod 14 which is secured to the drum by means of brackets 25, 26. Din, mud, foliage, and possibly other detritus tends to collect in this small area between flail 32 and drum 31 and moving projections 19 aid in keeping that material from caking into that area.

FIGS. 5 and 6 are perspective and top views, respectively, of defoliating apparatus 40 in accordance with an embodiment of the present invention. Defoliator 40 is an example of an otherwise conventional defoliating apparatus, as modified to include the flails disclosed herein. The defoliator includes tongue assembly 41, drive assembly 42, leveling assembly 43, and height adjusting assembly 44 with an associated hydraulic cylinder 45, The height adjusting assembly may be used to control the vertical relative positioning of wheel 46 and frame 47, and consequently, the relative positioning of the frame relative to the ground.

As shown in FIG. 6, three rows of flail clusters 30 are rotatably attached to frame 47. These flail clusters may be rotated in the same or different directions. For example, the flail clusters may be rotated in a single direction, causing the elongated fingers of the flails to move either rearward or forward. An alternative is to rotate the two rows of flail clusters nearest to tongue 41 in one direction (rearward or forward), and to rotate the remaining single row of flail clusters in a direction that is opposite to the direction of the front-two rotors. Still further rotational arrangements may also be used and are within the teachings of the present disclosure.

In operation, defoliator 40 may be pulled through the field such that the tops of the crops, such as sugar beets, would be removed due to the flails on the rotating flail clusters striking the tops of the plants. Note that the spacing between the flail clusters may be adjusted as necessary. Also, flail clusters 30 are shown in the same positions in each row. The flail clusters could be staggered so that there are no gaps undefoliated after defoliater 40 makes a single pass over the ready-to-harvest crop.

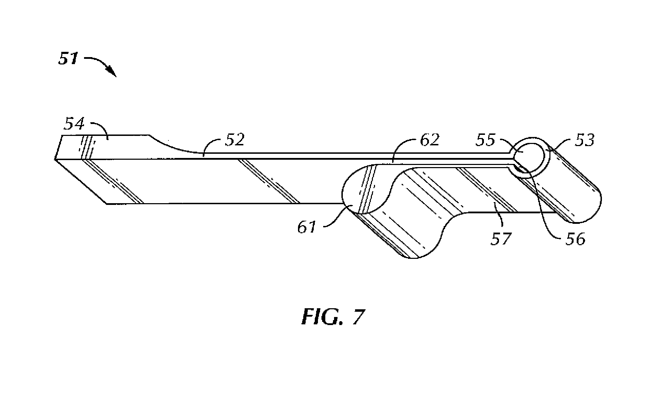

An alternative flail element embodiment is shown in Fig. 7. Flail element 51 has a single finger 52 extending from one side of split base 53. Finger 52 is formed with head 54 which may be shaped similar to head 17 on finger 15 (Figs. 1 and 2), or it may have some other enhanced mass configuration. Base 53 may be cylindrical, as shown in Fig. 7, or it may be shaped similar to base 12 in Figs. 1 and 2. The base has bore 55 and gap 56, similar to the Fig. 1 embodiment.

Flail element 51 also includes counterweight finger 57, which finger is shorter than finger 52, and is formed with head 61 of enlarged mass, As with the Fig. 1 embodiment, there is a slot or space 62 between fingers 51 and 57.

The flail element of Fig. 7 functions in the same way as that of Fig. 1, to the extent that it is a quick connecting replacement flail element. It is not operationally reversible but the base gap can be easily opened to engage with, or be removed from, a mounting rod such as rod 14 in Fig. 3.

While the invention has been described in detail with reference to disclosed embodiments, various modifications within the scope of the invention will be apparent to those of ordinary skill in this technological field. It is to be appreciated that features described with respect to one embodiment typically may be applied to other embodiments, Therefore, the invention properly is to be construed only with reference to the claims.

## Claims

1. A flail element for a defoliating machine having a plurality of mounting rods, the flail element comprising:
a proximal region comprising a base formed with a bore sized to receive a said mounting rod; and
elongated fingers forming a distal region of the flail element and extending from said base, said bore being formed with a gap in its circumference, one of said elongated fingers extending from said base on either side of said gap, said base being formed of material sufficiently flexible to enable said gap to be spread sufficiently to fit over a said mounting rod.

2. The flail element according to claim 1, wherein the distal ends of said fingers are enlarged compared with the extent of said fingers between said base and said distal ends.

3. The flail element according to claim 1, wherein the extent of said fingers between said base and the distal ends of said fingers are relatively thin compared with the distal ends of said fingers thereby providing increased mass at said distal ends.

4. The flail element according to claim 1, wherein said base and said ringers comprise a unitary structure.

5. The flail element according to claim 1, wherein said flail element is formed of an elastomer.

6. The flail element according to claim 5, said elastomer is a nylon elastomer.

7. The flail element according to claim 1, wherein said flail element is formed of a tough plastic,

8. The flail element according to claim 1, wherein said flail element is formed of a thermoplastic.

9. The flail element according to claim 7, wherein said plastic is a polyurethane,

10. The flail element according to claim 1, wherein said flail element is formed of rubber.

11. The flail element according to claim 1, wherein said sufficiently flexible material of said base is formed of relatively rigid material having sufficient flexibility to enable said gap in said base to be spread sufficiently to fit over a said mounting rod.

12. The flail element according to claim 11, wherein said relatively rigid material is selected from the group consisting of rubber, a plastic, thermoplastic, elastomers, nylon elastomers, and polyurethane.

13. The flail element according to claim 1, wherein said flail element is mountable on a said mounting rod with one of said fingers oriented in a leading position in relation to direction of motion.

14. The flail element according to claim 2, wherein said fingers are of unequal length.

15. The flail element according to claim 1, wherein said base is formed with a projection extending therefrom in a direction generally opposite to said fingers,

16. A flail comprising of a plurality of said flail elements constructed according to claim 1, which elements are pivotably mounted to a said mounting rod.

17. A rotor for use with a defoliating apparatus having a plurality of mounting rods, said rotor comprising:
a plurality of flails, each said flail comprised of a plurality of flail elements rotatably coupled to a said mounting rod, each of said plurality of flail elements comprising:
a proximal region comprising a base formed with a bore sized to receive a said mounting rod; and
a pair of elongated fingers forming a distal region of flail element and extending from said base, said bore being formed with a gap in its circumference, one of said elongated fingers extending from said base on either side of said gap, said base being formed of material sufficiently flexible to enable said gap to be spread sufficiently to fit over a said mounting rod;
a drum having an outer surface; and
brackets mounted on said drum to which said mounting rods are coupled, by which said plurality of flails are coupled to said drum.

18. A defoliating apparatus having a plurality of mounting rods, the defoliating apparatus comprising:
a plurality of flails each comprised of a plurality of flail elements rotatably mounted to an outer surface of said drum, wherein each of said plurality of flail elements comprises:
a proximal region comprising a base formed with a bore sized to receive a said mounting rod; and;
a pair of elongated fingers forming a distal region of flail element and extending from said base, said bore being formed with a gap in its circumference, one of said elongated fingers extending from said base on either side of said gap, said base being formed of material sufficiently flexible to enable said gap to be spread sufficiently to fit over a said mounting rod;
a frame; and
a rotor comprising a drum, said rotor being rotatably mounted to said frame, said rotor comprising;
a drum having an outer surface; and
brackets mounted on said drum to which said mounting rods are coupled, by which said plurality of flails are coupled to said drum.

19. A method for replacing flail elements on mounting rods on rotatable drums in apparatus for defoliating row crops, the method comprising:
removing the spent flails and flail elements from the defoliating apparatus without disassembling the rotatable drums and mounting rods of the defoliating apparatus; and
mounting replacement flail elements constructed in accordance with claim 1 by spreading said gap in said base sufficiently to fit over a said mounting rod on a rotatable drum in said defoliating apparatus.
